# EUROPÄISCHE PATENTSCHRIFT

(11) **EP 1 839 922 B1**
(45) Veröffentlichungstag und Bekanntmachung des Hinweises auf die Patenterteilung: **01.07.2009**
(21) Anmeldenummer: 07011348.5
(22) Anmeldetag: 18.01.2001
(51) Int. Cl.: B60J 7/14, B60J 7/20

(54) **Umwandelbares Fahrzeugdach**
Convertible vehicle roof
Toit de véhicule transformable

(30) Priorität: 18.01.2000 DE 10001958
(43) Veröffentlichungstag der Anmeldung: 03.10.2007
(62) Teilanmeldung aus: 01101011.3
(73) Patentinhaber: Webasto AG, 82131 Stockdorf (DE)
(72) Erfinder: Schütt, Thomas, 82256 Fürstenfeldbruck (DE); Miklosi, Stefan, 81247 München (DE)
(74) Vertreter: Konnerth, Dieter Hans

(56) Entgegenhaltungen:
- EP-A1- 0 967 100
- DE-C1- 4 326 255
- DE-U1- 29 809 006
- US-A- 2 812 975

## Beschreibung

Die Erfindung betrifft ein umwandelbares Fahrzeugdach mit einem vorderen Dachelement und einem hinteren Heckelement, die mittels Hebeleinrichtungen an der Karosserie schwenkbar gelagert und in einen von einer schwenkbaren Stauraumabdeckung abdeckbaren Verdeckstauraum ablegbar sind.

Aus der DE 44 35 222 C1 ist ein derartiges Fahrzeugdach mit einem vorderen Dachelement und einem hinteren Heckelement bekannt geworden. Das Dachelement, das über schwenkbar angelenkte Dachlenker am Windlauf verriegelbar ist, ist mittels eines Schwenkhebels an der Karosserie schwenkbar angelenkt. Das Heckelement, das sich an das Dachelement nach hinten anschließt und dichtend auf einer Verdeckkastenklappe aufsitzt, die den Übergang zum Kofferraum bildet, ist über einen an der Karosserie gelagerten Schwenkhebel, der mittels eines Hydraulikzylinders schwenkbar ist und über einen weiteren Hydraulikzylinder an einem hinteren Anlenkpunkt des Heckelements mit diesem gekoppelt ist, sowie mit einem zusätzlichen Hydraulikzylinder und einer dazu parallelen Teleskopführung, die einerseits am Schwenkhebel befestigt sind und andererseits an dem Heckelement an einem vorderen Anlenkpunkt angreifen, derart bewegbar gelagert, dass es durch Verschwenken und Betätigen der Hebel- und Hydraulikzylindereinrichtungen aus seiner Schließstellung von der Verdeckkastenklappe abgehoben und nach vorne über das Dachelement verschwenkt werden kann. Nachdem das Heckelement an dem Dachelement verriegelt und der Dachlenker entriegelt worden ist, wird durch Betätigen der Hebel- und Hydraulikzylindereinrichtungen das Dachelement als Einheit mit dem Heckelement nach hinten in einen Stauraum verschwenkt und darin im wesentlichen horizontal abgelegt. Das Dachelement verschwenkt dabei entsprechend der Führung durch seinen Schwenklenker sowie durch die Hebel- und Hydraulikzylindereinrichtungen des Heckelements. Diese horizontale Ablage des Dachelements und des Heckelements erfordert jedoch einen großen Stauraum, der bis in den Kofferraum reicht und diesen verkleinert.

In der DE 43 26 255 C1 ist ein Cabrio-Fahrzeug mit einem Hardtop-Dach offenbart, das einen vorderen Dachabschnitt und einen hinteren Dachabschnitt aufweist. Der vordere Dachabschnitt enthält seitliche Dachteile und ein hinteres Dachteil sowie einen öffnungsfähigen Deckel, der an den seitlichen Dachteilen verschiebbar gelagert ist. Der vordere Dachabschnitt ist an B-Säulen schwenkbar gelagert und zum Ablegen des Daches mit den B-Säulen entlang karosseriefesten Längsführungen nach hinten verschiebbar und anschließend absenkbar. Der hintere Dachabschnitt enthält eine Heckscheibe und von dieser unabhängig bewegbare seitliche Dreieckfenster. Die Heckscheibe ist an Führungen, die im hinteren Dachteil des vorderen Dachabschnitts angeordnet sind, verschiebbar gelagert und wird von einem Antrieb nach vorne unter das hintere Dachteil geschoben. Die seitlichen Dreieckfenster sind über die Antriebe in eine abgesenkte Position an den Seiten des Stauraumes absenkbar. Der hintere Dachabschnitt verbleibt beim Ablegen somit nicht in seiner Konfiguration, sondern die Heckscheibe wird von den Seitenfenstern getrennt und an den vorderen Dachabschnitt verlagert. Dafür sind zusätzliche Antriebe und Führungen erforderlich, so dass dieses Dach aufwendig aufgebaut ist. Da die seitlichen Dachfenster lediglich um eine hintere karosseriefeste Schwenkachse herabgeschwenkt werden, benötigen sie einen vergleichsweise großen Ablageraum in Fahrzeuglängsrichtung.

Der Erfindung liegt die Aufgabe zugrunde, ein eingangs genanntes Fahrzeugdach zu schaffen, das mit einem verbesserten Ablagemechanismus in einer platzsparenden Anordnung in einem Verdeckstauraum ablegbar ist.

Die Aufgabe wird bei dem oben genannten Fahrzeugdach erfindungsgemäß dadurch gelöst, dass das Dachelement und das Heckelement in dem Verdeckstauraum im wesentlichen in vertikaler Anordnung abgelegt sind und dass der hinter den Sitzen angeordnete Verdeckstauraum für das Fahrzeugdach zu den Sitzen hin von einer schwenkbaren Innenabdeckung begrenzt ist. Durch diese platzsparende Anordnung des abgelegten Fahrzeugdachs oder Verdecks wird das Kofferraumvolumen nicht eingeschränkt. Des weiteren bleibt durch die in etwa vertikale Ausrichtung des abgelegten Fahrzeugdaches in dem entsprechenden sich im wesentlichen vertikal erstreckenden Verdeckstauraum ein direkt hinter den Sitzen vorgesehener Nutzraum auch bei abgelegtem Fahrzeugdach von oben zugänglich und der Zugang zu dem Verdeckstauraum zum Ablegen des Fahrzeugdaches kann durch Verschwenken der Innenabdeckung nach vorne in Richtung zu den Sitzen hin im erforderlichen Maß geöffnet werden.

Vorteilhafte Ausgestaltungen der Erfindung sind in den Unteransprüchen angegeben.

Wenn die schwenkbare Innenabdeckung zumindest teilweise flexibel gestaltet ist, kann ein unmittelbar hinter den Sitzen vorgesehener Nutzraum bei geschlossenem Fahrzeugdach in den Verdeckstauraum hinein erweitert werden, ohne dass die Innenabdeckung entfernt werden müßte.

Das Heckelement, das insbesondere eine Heckscheibe enthalten kann, wird bevorzugt als Einheit in den Verdeckstauraum abgelegt. Da das Heckelement zum Ablegen nicht in unterschiedliche Baugruppen aufgeteilt wird, sind keine entsprechenden aufwendigen Mechanismen erforderlich. Jedoch kann das Heckelement auch Elemente aufweisen, die beim Ablegen in eine platzsparende Anordnung gegeneinander bewegt werden, beispielsweise Seitenteile oder Seitenfenster, die an den Mittelteil geklappt werden.

Vorzugsweise ist das Heckelement bei geschlossenem Dachelement im Verdeckstauraum ablegbar, so dass ein Fahrbetrieb bei teilweise geöffnetem Fahrzeugdach möglich ist. Dabei ist das Heckelement unabhängig vom Dachelement ablegbar und auch entnehmbar, um das Fahrzeugdach wieder zu schließen. In einer zweckmäßigen Gestaltung ist eine an der Karosserie schwenkbar gelagerte Stauraumabdeckung des Verdeckstauraumes bei geschlossenem Heckelement aus ihrer Abdeckstellung nach oben schwenkbar, wodurch ein einfacher Bewegungsablauf beim Ablegen des Heckelements ermöglicht ist.

Bevorzugt enthält die das Dachelement lagernde Hebeleinrichtung zwei einen Viergelenkmechanismus bildende Hebel. In Abhängigkeit von den gewählten Positionen der Gelenke der beiden Hebel kann auf einfache Weise die Schwenkbewegung des Dachelementes vorgegeben und eingestellt werden. In vergleichbarer Gestaltung kann die das Heckelement lagernde Hebeleinrichtung zwei einen Viergelenkmechanismus bildende Lenker aufweisen.

Besonders bevorzugt ist eine Gestaltung, wonach bei geschlossenem Fahrzeugdach die Hebeleinrichtung bzw. die Hebel des Dachelements im wesentlichen vertikal in etwa im Bereich eines einen Türfensterrahmen oder ein rahmenloses Türfenster begrenzenden seitlichen Vorderrandes des Heckelements angeordnet sind. Durch diese Anordnung wird die freie Sicht durch eine im Heckelement angeordnete Seitenscheibe nicht oder nur geringfügig beeinträchtigt. Wenn das Heckelement geöffnet bzw. abgelegt ist, befinden sich die Hebel in dieser Teilöffnungsstellung seitlich in einer die Sicht zum Fahrzeugheck und insbesondere schräg nach hinten im wesentlichen nicht behindernden Anordnung.

Bevorzugt sind die beiden Hebeleinrichtungen derart ausgelegt, dass zum vollständigen Öffnen des Fahrzeugdaches nach dem Hochschwenken der Stauraumabdeckung und dem Vorschwenken der Innenabdeckung zunächst das Heckelement und anschließend das Dachelement in den Verdeckstauraum abgelegt wird.

Zweckmäßigerweise enthalten das Dachelement und das Heckelement jeweils einen eigenen Antrieb, jedoch kann auch eine Antriebseinrichtung mit festgelegtem Bewegungsablauf für das Dachelement und das Heckelement vorgesehen sein.

Für eine einfache und dennoch sichere Befestigung der die Hebel und Lenker karosserieseitig lagernden Gelenke kann vorgesehen sein, dass diese an einer Lagerplatte an der Karosserie angeordnet sind.

Nachfolgend wird ein Ausführungsbeispiel der Erfindung unter Bezugnahme auf Zeichnungen näher erläutert. Es zeigt:
- Fig. 1: in einer Seitenansicht in schematischer Darstellung ein Hardtop-Fahrzeugdach eines Cabriolets in geschlossener Stellung;
- Fig. 2: in einer Seitenansicht das Fahrzeugdach mit einer hochgeschwenkten Stauraumabdeckung eines Verdeckstauraumes;
- Fig. 3: in einer Seitenansicht das Fahrzeugdach mit einer vorgeschwenkten Innenabdeckung des Verdeckstauraumes;
- Fig. 4: in einer Seitenansicht das Fahrzeugdach beim Öffnen seines Heckelements;
- Fig. 5: in einer Seitenansicht das Fahrzeugdach mit in dem Verdeckstauraum abgelegtem Heckelement;
- Fig. 6: in einer Seitenansicht das Fahrzeugdach in einer Teilöffnungsstellung;
- Fig. 7: in einer Seitenansicht das Fahrzeugdach beim Ablegen seines vorderen Dachelements in den Verdeckstauraum; und
- Fig. 8: in einer Seitenansicht das abgelegte Fahrzeugdach in der Offenstellung.

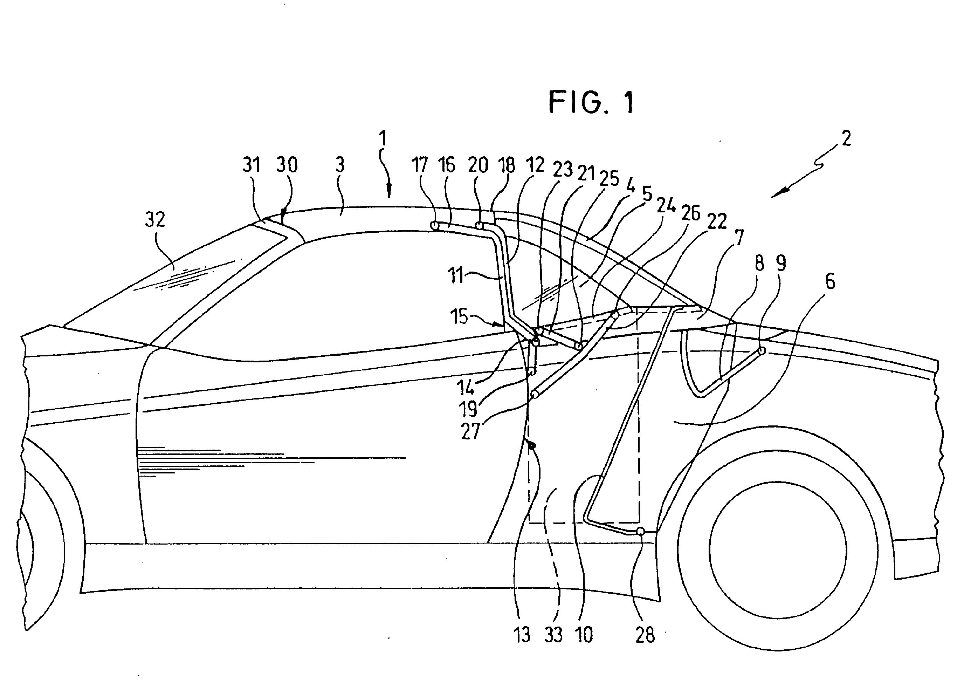

Ein Fahrzeugdach 1 eines Cabriolets 2 ist als umwandelbares Hardtop gestaltet (siehe Fig. 1) und weist ein vorderes festes Dachelement 3 und ein hinteres festes Dach- oder Heckelement 4 auf, das eine hintere Seitenscheibe 5 und eine Heckscheibe enthalten kann. Das Fahrzeugdach 1 ist zum Öffnen umwandelbar, indem das Dachelement 3 und das Heckelement 4 in einen Verdeckstauraum 6, der hinter den Sitzen und vor dem Kofferraum angeordnet ist, im wesentlichen vertikal abgelegt wird. Eine Stauraumabdeckung 7 ist über einen Lenker 8 mit einem rückwärtigen Gelenk 9 an der Karosserie gelagert und umgibt das Heckelement 4 an dessen Unterrand seitlich und hinten in etwa U-förmig, wobei sie aus ihrer bei geschlossenem Fahrzeugdach 1 den Verdeckstauraum 6 abdeckenden Stellung, in der sie am Unterrand des Heckelements 4 dicht anliegt, hochklappbar ist (die Beschreibung des Fahrzeugdachs erfolgt anhand der dem Betrachter zugewandten, bezüglich des Fahrzeugs linksseitigen Lagereinrichtungen, wobei selbstverständlich auch die gegenüberliegende rechte Fahrzeugseite die entsprechenden Lagereinrichtungen aufweist). Eine Innenabdeckung 10, die den Verdeckstauraum 6 zu den Sitzen hin begrenzt, ist an einem unteren Schwenkgelenk 28 im Bereich des Karosseriebodens schwenkbar gelagert. Bei geschlossenem Fahrzeugdach 1 (siehe Fig. 1) liegt die Innenabdeckung 10 innen am hinteren Unterrand des Heckelements 4 an. Die Innenabdeckung 10 kann eine starre Platte oder einen starren Rahmen mit einer flexiblen Bespannung aufweisen.

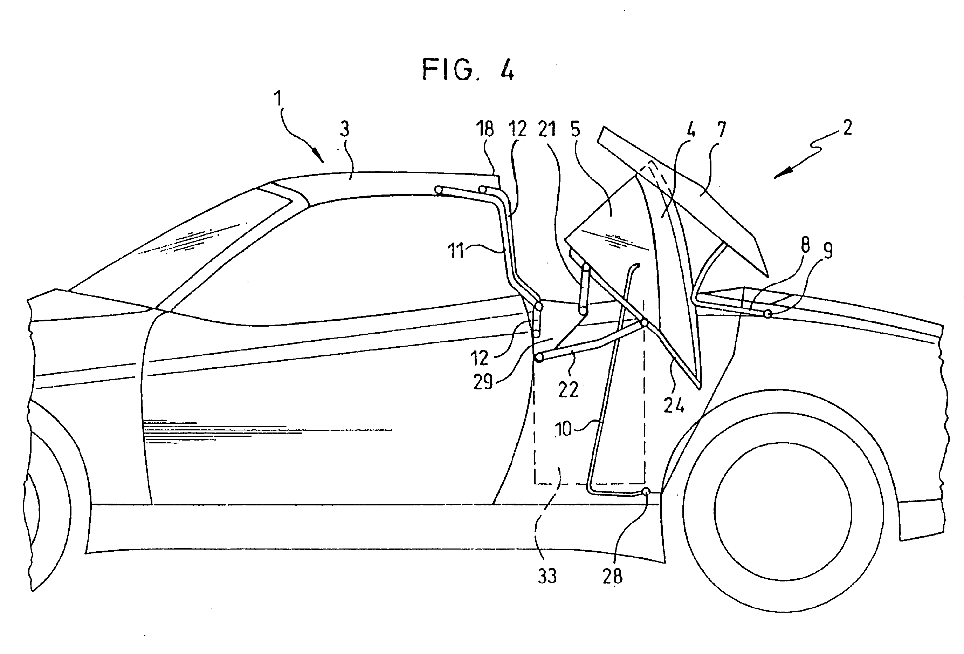

Das vordere Dachelement 3 ist am Fahrzeug mittels einer innerhalb des Fahrzeugdaches 1 angeordneten Hebeleinrichtung schwenkbeweglich gelagert, die zwei eine Viergelenkanordnung bildende Hebel 11 und 12 aufweist. Der erste Hebel 11 der Hebeleinrichtung ist im Bereich des hinteren Türrahmens 13 innen an der Karosserie in einem unteren Gelenk 14 gelagert und in Schließstellung des Fahrzeugdaches 1 im wesentlichen vertikal entlang eines seitlichen Vorderrandes 15 des Heckelements 4 ausgerichtet, wobei der Hebel 11 an der Innenseite des Heckelements 4 z. B. hinter einer am seitlichen Vorderrand 15 des Heckelements 4 für eine Türseitenscheibe angebrachten Türdichtung angeordnet ist. Ein oberer Endabschnitt 16 des Hebels 11 ist entlang einer oberen Türdichtung am Seitenrand des Dachelements 3 nach vorne abgewinkelt und erstreckt sich bis zu einem Gelenk 17, das vom Hinterrand 18 des Dachelements 3 beabstandet ist. Der zweite Hebel 12 der Hebeleinrichtung ist an einem unteren Gelenk 19 gelagert, das seitlich an der Karosserie in etwa unterhalb des unteren Gelenks 14 des ersten Hebels 11 angeordnet ist. Der zweite Hebel 12 erstreckt sich in etwa neben dem ersten Hebel 11 aufwärts bis zu einem Gelenk 20 im Bereich des Hinterrands 18 des Dachelements 3. Die Anordnungspositionen der Gelenke 14, 17 und 19, 20 der Hebel 11 bzw. 12 sind entsprechend des durch die Viergelenkanordnung erzielbaren Bewegungsverhaltens gewählt. Die beiden unteren Gelenke 14 und 19 können an einem karosseriefesten Lagerteil 29, z. B. einer Lagerplatte, angebracht sein (Fig. 4).

Das Heckelement 4 ist über eine Hebeleinrichtung mit zwei in Viergelenkanordnung gelagerten Lenkern 21 und 22 an der Karosserie schwenkbeweglich gelagert. Der erste Lenker 21 ist an einem Gelenk 23 im Vorderbereich am seitlichen Unterrand 24 des Heckelements 4 und an einem an der Karosserie angeordneten Gelenk 25 gelagert. Der zweite Lenker 22 ist einerseits an einem Gelenk 26 im Hinterbereich am seitlichen Unterrand 24 des Heckelements 4 und andererseits an einem Gelenk 27 an der Karosserie im Bereich des hinteren Türrahmens 13 unterhalb des Gelenks 19 des zweiten Hebels 12 des Dachelements 3 gelagert.

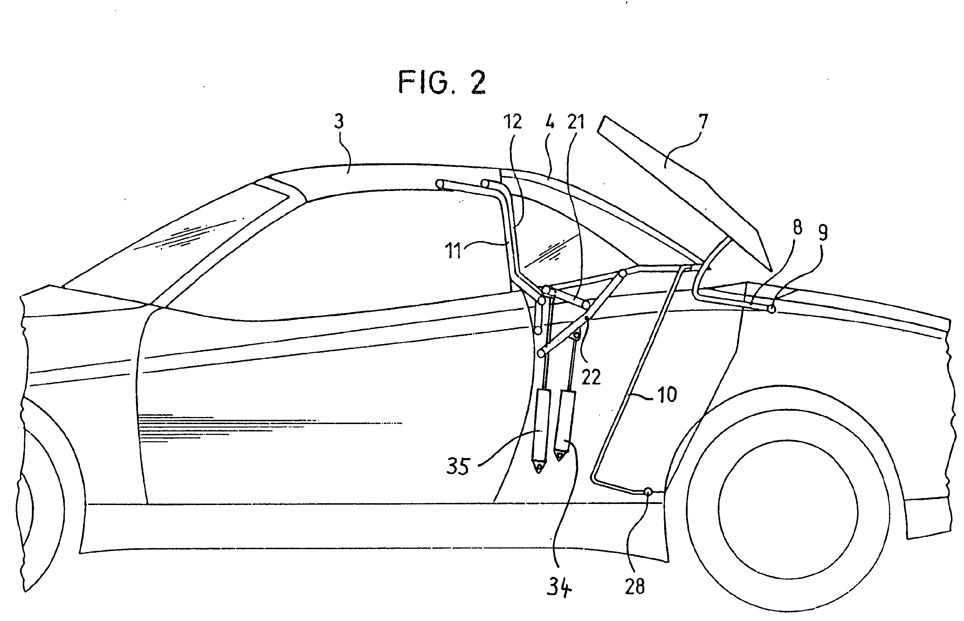

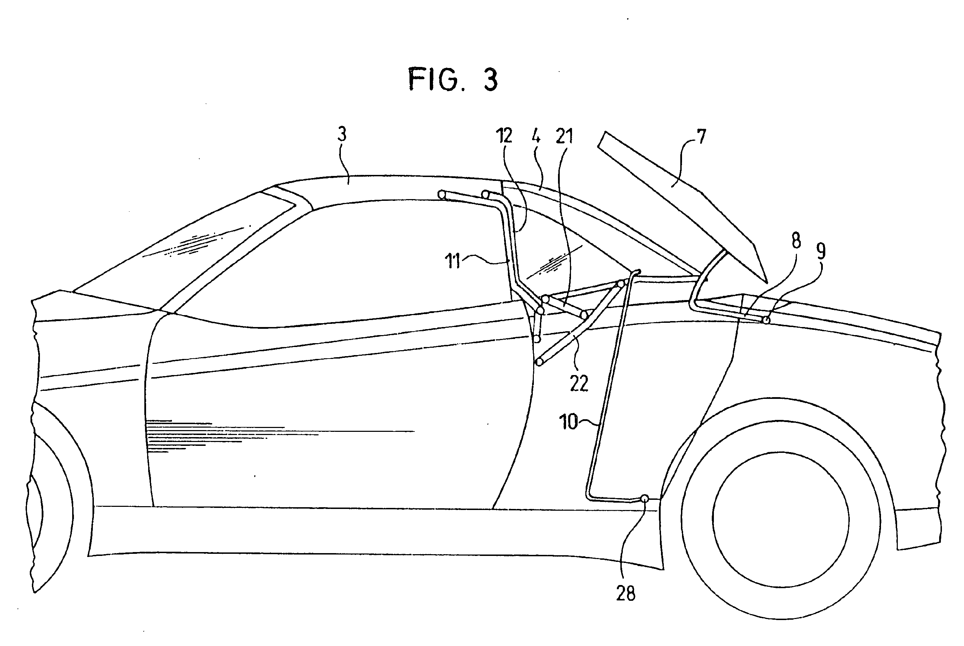

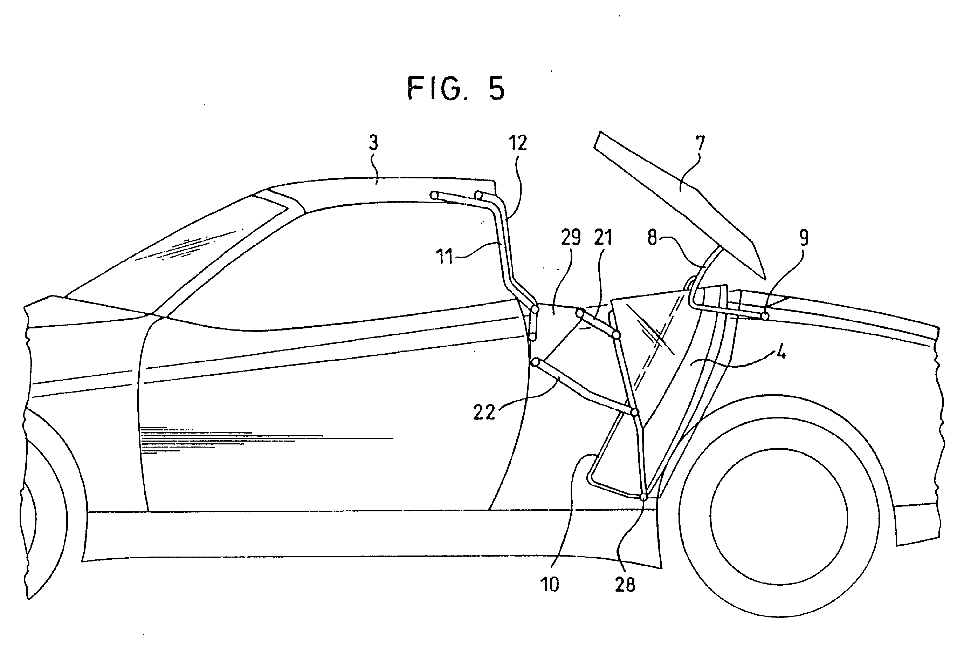

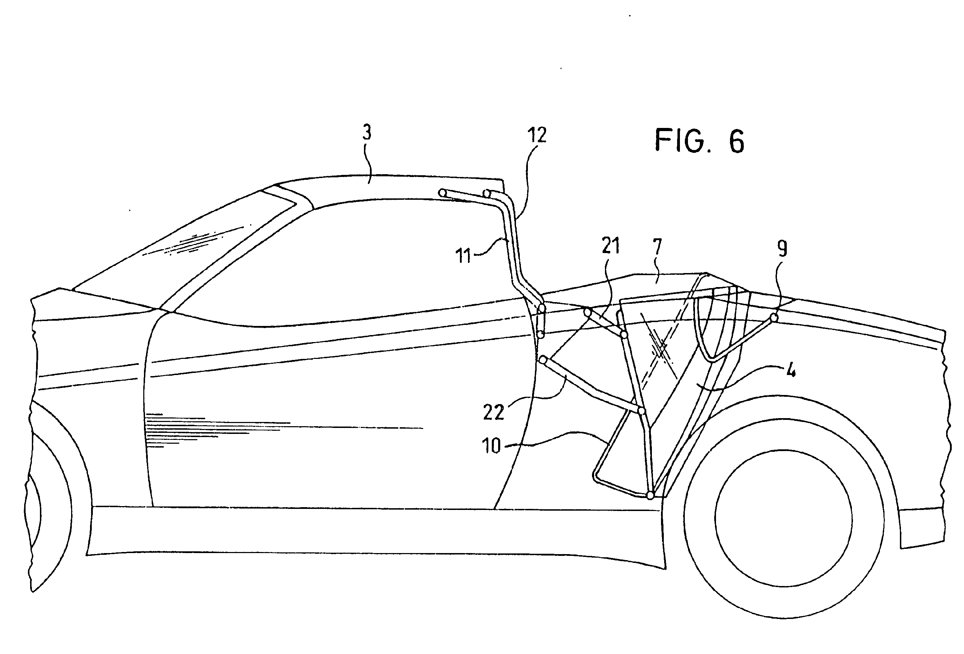

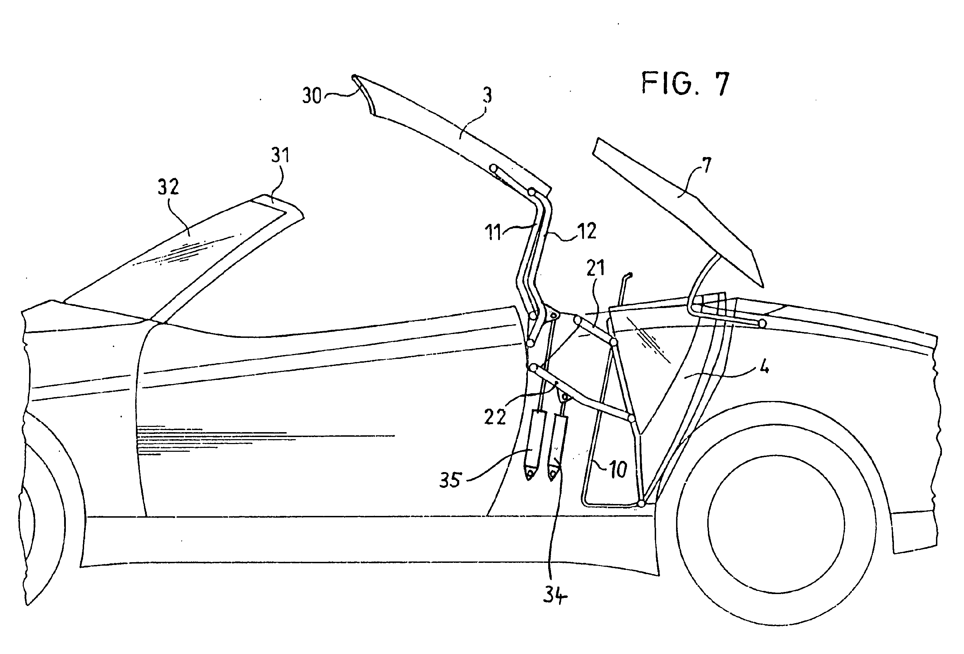

Zum Öffnen des Fahrzeugdaches 1 wird die Stauraumabdeckung 7 durch einen nicht dargestellten Antrieb um ihr Gelenk 9 nach oben geschwenkt (Fig. 2) und die Innenabdeckung 10 des Verdeckstauraums 6 wird nach vorne in Richtung zu den Sitzen geklappt, so dass der Verdeckstauraum 6 nach oben hin geöffnet ist (Fig. 3). Anschließend wird das Heckelement 4 durch einen Antrieb 34 (schematisch in den Fig. 2 und 7 als hydraulische Kolben-Zylindereinheit beispielhaft dargestellt), der einerseits an dem Lenker 22 und andererseits an der Karosserie gelagert ist, aus seiner Schließstellung nach hinten und abwärts in den Verdeckstauraum 6 geschwenkt (Fig. 4) und in etwa in vertikaler Ausrichtung abgelegt (Fig. 5). Die Innenabdeckung 10 wird in ihre Ausgangsposition zurückgeschwenkt. Nach dem Herabschwenken der Stauraumabdeckung 7 in ihre den Verdeckstauraum 6 abdeckenden Ausgangsposition auf der Karosserie (Fig. 6) befindet sich das Fahrzeugdach 1 in einer fahrbereiten Teilöffnungsstellung, in der das Heckelement 4 in dem Verdeckstauraum 6 abgelegt ist.

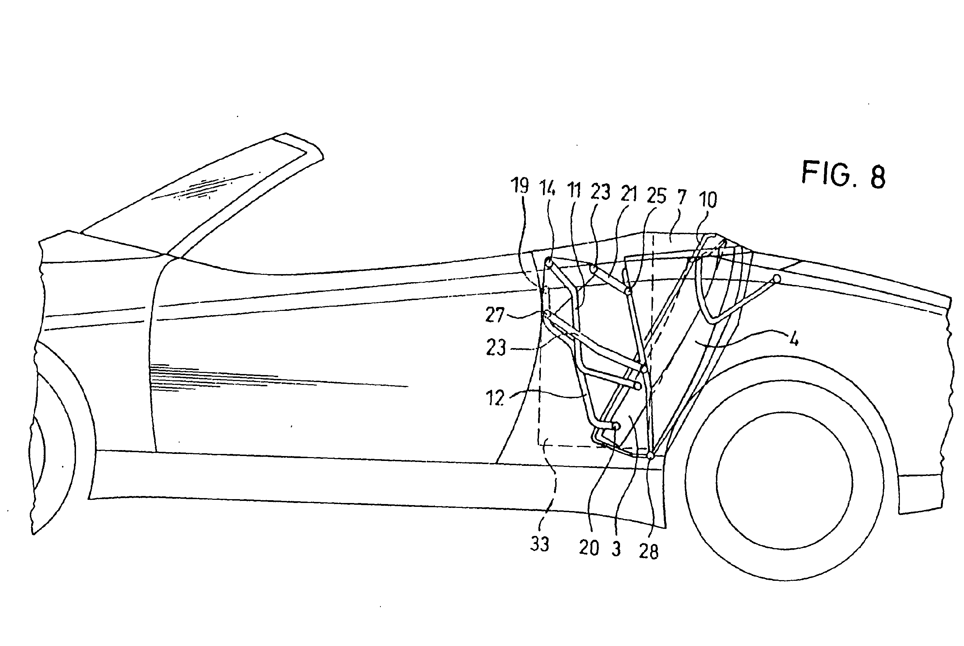

Zum vollständigen Öffnen des Fahrzeugdaches 1 wird bei geöffneter Stauraumabdeckung 7 und nach vorne geklappter Innenabdeckung 10 das Dachelement 3, nachdem es an seinem Vorderrand 30 aus einem Riegeleingriff an einem Windlauf 31 oberhalb der Frontscheibe 32 entriegelt worden ist, durch einen Antrieb 35 (schematisch in den Fig. 2 und 7 als hydraulische Kolben-Zylindereinheit beispielhaft dargestellt), der einerseits an dem Hebel 12 und andererseits an der Karosserie gelagert ist, über seine beiden Hebel 11, 12 nach hinten in Richtung zum Verdeckstauraum 6 verschwenkt (Fig. 7) und darin abgesenkt (Fig. 8), wobei es in etwa in vertikaler Ausrichtung unmittelbar vor dem Heckelement 4 angeordnet ist. Die Innenabdeckung 10 ist wieder zurückgeschwenkt und deckt mit ihrem oberen, sich nach hinten erstreckenden Rand und der wieder herabgeklappten Stauraumabdeckung 7 das abgelegte Fahrzeugdach (Dachelement 3 und Heckelement 4) ab. Damit befindet sich das Fahrzeugdach 1 des Cabriolets 2 in seiner Offenstellung.

Wenn die Innenabdeckung 10 flexibel gestaltet ist, z. B. als starrer Rahmen mit einer flexiblen Bespannung, kann bei geschlossenem Fahrzeugdach ein Nutzraum 33 (in Fig. 1 schematisch durch strichlierte Linie dargestellt) hinter den Sitzen in den Verdeckstauraum 6 hinein erweitert werden.

### Bezugszeichenliste

- 1: Fahrzeugdach
- 2: Cabriolet
- 3: Dachelement
- 4: Heckelement
- 5: Seitenscheibe
- 6: Verdeckstauraum
- 7: Stauraumabdeckung
- 8: Lenker
- 9: Gelenk
- 10: Innenabdeckung
- 11: erster Hebel
- 12: zweiter Hebel
- 13: hinterer Türrahmen
- 14: Gelenk
- 15: Vorderrand
- 16: Endabschnitt
- 17: Gelenk
- 18: Hinterrand
- 19: Gelenk
- 20: Gelenk
- 21: Lenker
- 22: Lenker
- 23: Gelenk
- 24: Unterrand
- 25: Gelenk
- 26: Gelenk
- 27: Gelenk
- 28: Schwenkgelenk
- 29: Lagerteil
- 30: Vorderrand
- 31: Windlauf
- 32: Frontscheibe
- 33: Nutzraum
- 34: Antrieb
- 35: Antrieb

## Patentansprüche

1. Umwandelbares Fahrzeugdach mit einem vorderen Dachelement (3) und einem hinteren Heckelement (4), die mittels Hebeleinrichtungen (11, 12, 21, 22) an der Karosserie schwenkbar gelagert und in einen von einer schwenkbaren Stauraumabdeckung (7) abdeckbaren Verdeckstauraum (6) ablegbar sind,
**dadurch gekennzeichnet,**
**dass** das Dachelement (3) und das Heckelement (4) in dem Verdeckstauraum (6) im wesentlichen in vertikaler Anordnung abgelegt sind und dass der hinter den Sitzen angeordnete Verdeckstauraum (6) für das Fahrzeugdach (1) zu den Sitzen hin von einer schwenkbaren Innenabdeckung (10) begrenzt ist.

2. Fahrzeugdach nach Anspruch 1,
**dadurch gekennzeichnet, dass** die Innenabdeckung (10) zumindest teilweise flexibel ist.

3. Fahrzeugdach nach Anspruch 1 oder 2,
**dadurch gekennzeichnet, dass** das insbesondere eine Heckscheibe enthaltende Heckelement (4) als Einheit in den Verdeckstauraum (6) ablegbar ist.

4. Fahrzeugdach nach einem der Ansprüche 1 bis 3,
**dadurch gekennzeichnet, dass** das Heckelement (4) bei geschlossenem Dachelement (3) im Verdeckstauraum (6) ablegbar ist.

5. Fahrzeugdach nach einem der Ansprüche 1 bis 4,
**dadurch gekennzeichnet, dass** eine an der Karosserie schwenkbar gelagerte Stauraumabdeckung (7) des Verdeckstauraumes (6) bei geschlossenem Heckelement (4) aus ihrer Abdeckstellung nach oben schwenkbar ist.

6. Fahrzeugdach nach einem der Ansprüche 1 bis 5,
**dadurch gekennzeichnet, dass** die das Dachelement (3) lagernde Hebeleinrichtung (11, 12) zwei einen Viergelenkmechanismus bildende Hebel (11, 12) aufweist.

7. Fahrzeugdach nach einem der Ansprüche 1 bis 6,
**dadurch gekennzeichnet, dass** die das Heckelement (4) lagernde Hebeleinrichtung (21, 22) zwei einen Viergelenkmechanismus bildende Lenker (21, 22) aufweist.

8. Fahrzeugdach nach einem der Ansprüche 1 bis 7,
**dadurch gekennzeichnet, dass** bei geschlossenem Fahrzeugdach (1) die Hebeleinrichtung bzw. die Hebel (11, 12) des Dachelements (3) im wesentlichen vertikal in etwa im Bereich eines seitlichen Vorderrandes (15) des Heckelements (4) angeordnet sind.

9. Fahrzeugdach nach einem der Ansprüche 1 bis 8,
**dadurch gekennzeichnet, dass** zwischen den Sitzen und dem Verdeckstauraum (6) bzw. der Innenabdeckung (10) ein Nutzraum (33) vorgesehen ist.

10. Fahrzeugdach nach einem der Ansprüche 1 bis 9,
**dadurch gekennzeichnet, dass** die beiden Hebeleinrichtungen (11, 12, 21, 22) derart ausgelegt sind, dass zum vollständigen Öffnen des Fahrzeugdaches (1) nach dem Hochschwenken der Stauraumabdeckung (7) und dem Vorschwenken der Innenabdeckung (10) zunächst das Heckelement (4) und anschließend das Dachelement (3) in den Verdeckstauraum (6) abgelegt wird.

11. Fahrzeugdach nach einem der Ansprüche 1 bis 10,
**dadurch gekennzeichnet, dass** das Dachelement (3) und das Heckelement (4) jeweils einen eigenen Antrieb (35 bzw. 34) aufweisen.

12. Fahrzeugdach nach einem der Ansprüche 1 bis 11,
**dadurch gekennzeichnet, dass** die Gelenke der Hebel (11, 12) und Lenker (21, 22) karosserieseitig an einer Lagerplatte (29) angeordnet sind.

## Claims

1. Convertible vehicle roof with a front roof element (3) and a rear tail element (4) which are mounted pivotably on the vehicle body by means of lever devices (11, 12, 21, 22) and can be put away into a folding-top storage space (6) which can be covered by a pivotable storage-space covering (7), **characterized in that** the roof element (3) and the tail element (4) are put away substantially in a vertical arrangement in the folding-top storage space (6), and **in that** the folding-top storage space (6), which is arranged behind the seats and is intended for the vehicle roof (1), is delimited towards the seats by a pivotable inner covering (10).

2. Vehicle roof according to Claim 1, **characterized in that** at least part of the inner covering (10) is flexible.

3. Vehicle roof according to Claim 1 or 2,
**characterized in that** the tail element (4) which in particular contains a rear window can be put away as a unit into the folding-top storage space (6).

4. Vehicle roof according to one of Claims 1 to 3, **characterized in that** the tail element (4) can be put away in the folding-top storage space (6) when the roof element (3) is closed.

5. Vehicle roof according to one of Claims 1 to 4, **characterized in that,** when the tail element (4) is closed, a storage-space covering (7) of the folding-top storage space (6), which storage-space covering is mounted pivotably on the vehicle body, can be pivoted upwards out of its covering position.

6. Vehicle roof according to one of Claims 1 to 5, **characterized in that** the lever device (11, 12) which supports the roof element (3) has two levers (11, 12) forming a four-bar mechanism.

7. Vehicle roof according to one of Claims 1 to 6, **characterized in that** the lever device (21, 22) which supports the tail element (4) has two links (21, 22) forming a four-bar mechanism.

8. Vehicle roof according to one of Claims 1 to 7, **characterized in that,** when the vehicle roof (1) is closed, the lever device and the levers (11, 12) of the roof element (3) are arranged substantially vertically approximately in the region of a lateral front edge (15) of the tail element (4).

9. Vehicle roof according to one of Claims 1 to 8, **characterized in that** a useful space (33) is provided between the seats and the folding-top storage space (6) or the inner covering (10).

10. Vehicle roof according to one of Claims 1 to 9, **characterized in that** the two lever devices (11, 12, 21, 22) are designed in such a manner that, in order to completely open the vehicle roof (1), after the storage-space covering (7) is pivoted upwards and the inner covering (10) is pivoted forwards, first of all the tail element (4) and then the roof element (3) are put away into the folding-top storage space (6).

11. Vehicle roof according to one of Claims 1 to 10, **characterized in that** the roof element (3) and the tail element (4) each have their own drive (35 and 34, respectively).

12. Vehicle roof according to one of Claims 1 to 11, **characterized in that** the joints of the levers (11, 12) and links (21, 22) are arranged on a bearing plate (29) on the vehicle body.

## Revendications

1. Toit de véhicule transformable équipé d'un élément de toit (3) avant et d'un élément arrière (4) à l'arrière disposés de façon pivotante contre la carrosserie à l'aide de dispositifs de levier (11, 12, 21, 22) et pouvant être rangés dans un espace de rangement de capote (6) pouvant être recouvert par un cache de rangement (7) pivotant, **caractérisé en ce que** l'élément de toit (3) et l'élément arrière (4) sont rangés dans l'espace de rangement de capote (6) pour l'essentiel dans un agencement vertical ; et que l'espace de rangement de capote (6) disposé derrière les sièges est délimité par un cache intérieur (10) pivotant en direction des sièges pour le toit de véhicule (1).

2. Toit de véhicule selon la revendication 1, **caractérisé en ce que** le cache intérieur (10) est au moins en partie flexible.

3. Toit de véhicule selon la revendication 1 ou 2, **caractérisé en ce que** l'élément arrière (4) contenant notamment une lunette arrière peut être rangé comme une unité dans l'espace de rangement de capote (6).

4. Toit de véhicule selon l'une quelconque des revendications 1 à 3, **caractérisé en ce que** l'élément arrière (4) peut être rangé dans l'espace de rangement de capote (6) lorsque l'élément de toit (3) est fermé.

5. Toit de véhicule selon l'une quelconque des revendications 1 à 4, **caractérisé en ce qu'**un cache de rangement (7) de l'espace de rangement de capote (6) disposé de façon pivotante par rapport à la carrosserie peut pivoter vers le haut hors de sa position recouverte lorsque l'élément arrière (4) est fermé.

6. Toit de véhicule selon l'une quelconque des revendications 1 à 5, **caractérisé en ce que** le dispositif de levier (11, 12) logeant l'élément de toit (3) comporte deux leviers (11, 12) formant un mécanisme à quatre articulations.

7. Toit de véhicule selon l'une quelconque des revendications 1 à 6, **caractérisé en ce que** le dispositif de levier (21, 22) logeant l'élément arrière (4) comporte deux bras oscillants (21, 22) formant un mécanisme à quatre articulations.

8. Toit de véhicule selon l'une quelconque des revendications 1 à 7, **caractérisé en ce que** lorsque le toit de véhicule (1) est fermé, le dispositif de levier et/ou les leviers (11, 12) de l'élément de toit (3) sont disposés pour l'essentiel verticalement approximativement dans la zone d'un bord avant (15) latéral de l'élément arrière (4).

9. Toit de véhicule selon l'une quelconque des revendications 1 à 8, **caractérisé en ce qu'**un espace utile (33) est prévu entre les sièges et l'espace de rangement de capote (6) et/ou le cache intérieur (10).

10. Toit de véhicule selon l'une quelconque des revendications 1 à 9, **caractérisé en ce que** les deux dispositifs de levier (11, 12, 21, 22) sont réalisés de telle sorte que pour ouvrir entièrement le toit de véhicule (1) après avoir fait pivoter vers le haut le cache de rangement (7) et avoir fait pivoter vers l'avant le cache intérieur (10), l'élément arrière (4) d'abord puis l'élément de toit (3) sont rangés dans l'espace de rangement de capote (6).

11. Toit de véhicule selon l'une quelconque des revendications 1 à 10, **caractérisé en ce que** l'élément de toit (3) et l'élément arrière (4) comportent respectivement un entraînement (35 et/ou 34) propre.

12. Toit de véhicule selon l'une quelconque des revendications 1 à 11, **caractérisé en ce que** les articulations des leviers (11, 12) et des bras oscillants (21, 22) sont disposées côté carrosserie contre une plaque d'appui (29).
